# EUROPEAN PATENT APPLICATION

(11) **EP 0 694 831 A2**
(43) Date of publication of application: **31.01.1996**
(21) Application number: 95111704.3
(22) Date of filing: 25.07.1995
(51) Int. Cl.: G06F 3/06

(54) **Computer system having storage unit provided with data compression function andmethod of management of storage area thereof**

(30) Priority: 29.07.1994 JP 177986/94
(71) Applicant: HITACHI, LTD., Chiyoda-ku, Tokyo 100 (JP)
(72) Inventor: Achiwa, Kyosuke, Hino-shi (JP); Yamamoto, Akira, Sagamihara-shi (JP); Fujii, Tetsuhiko, Kawasaki-shi (JP); Yamagata, Hirotsugu, Odawara-shi (JP); Kobashi, Tetsuzo, Odawara-shi (JP)
(74) Representative: Strehl Schübel-Hopf Groening & Partner

(57) **Abstract**

A computer system including a host computer (1020) and a disk drive (1090) for compressing data utilized by the host computer (1020) and storing them. A write request of data of a logical block that is a management unit of data in the host computer (1020) is issued from the host computer (1020) to the disk drive (1090). The disk drive (1090) compresses the received data of logical block in accordance with the write request from the host computer (1020). A physical block that is a storage unit of physical data on the disk drive (1090) is allocated for compressed data, and the compressed data are stored in the allocated physical blocks. Furthermore, the disk drive (1090) determines whether there are a sufficient number of free physical blocks that have not been allocated for logical blocks or not, and gives a warning to the host computer (1020) when it is decided that the number of free physical blocks is small. The host computer (1020) informs a user of insufficiency of physical storage areas upon receipt of the warning.

## Description

### BACKGROUND OF THE INVENTION

The present invention relates to a computer system provided with a storage unit having a data compression function, and more particularly to a method of management of a physical storage area in the storage unit.

In a computer system, a data compression function is provided in a disk unit sometimes in order to utilize disk capacity of a disk unit connected to a host computer effectively.

For example, a technique for improving utilization efficiency in a disk having a compression function is disclosed in International Publication No. WO 91/20025 of PCT application No. PCT/US91/04270. With this technique, whenever a user issues a file delete request, it is notified to a disk system so as to make an area where the file that becomes an object of deletion has been stored a usable area.

In a normal operating system (OS), control information inside the OS is only rewritten, and deletion of the file is not informed to a disk when a file is deleted. Thus, the disk continues to hold useless data until write of data to the address thereof is generated in the next place. This does not become a problem in particular in the case of no compression. When the disk unit has a compression function, however, a technique such as disclosed in a prior art WO 91/20025 becomes necessary. That is to say, although the disk unit having a compression function shows logical addresses at practical physical capacity or more to the host computer, the practical physical storage area is sometimes used up before the data corresponding to all of the logical addresses are stored depending on compressibility of the data to be stored, and it becomes impossible sometimes to write the data corresponding to logical addresses thereafter or to superscribe data having compressibility lower than that of the originally stored data. It is desirable not to hold useless data to the utmost in order to avoid such a situation as far as practicable.

In a word, the prior art described above includes subjects as follows.

Since file management being conscious of physical capacity is not made in the prior art WO 91/20025 described above, there has been such a problem that, notwithstanding that a logically usable area exists, such a situation that a physical use area becomes full and it becomes impossible to write new data is generated sometimes.

Further, in order to make the physical storage area of the disk unit where the deleted file has been stored usable, frequent transfer of information that the host computer issues a command for notifying the disk of the deletion of the file, and the disk unit recognizes it and releases the storage area is generated, thus causing a problem that overhead of file delete process is increased. Further, there has been a problem that remodeling of a program by a large margin is required in order to realize the function described above.

### SUMMARY OF THE INVENTION

It is a first object of the present invention to prevent in advance a physically usable storage area from being filled up in a disk unit provided with a data compression function.

It is a second object of the present invention to reduce the overhead of the file delete process that is performed for the purpose of making the storage area of the disk unit where the deleted file has been stored usable, and to decrease the remodeling quantity of the program therefor.

In order to achieve the first object described above, the storage unit notifies the host computer of warning when it is determined that the number of physical blocks newly allocatable to logical blocks becomes fewer and the physical use area approaches to the full. The host computer receives this notification and outputs a warning to a console. Thereafter, the physical blocks that have been used by these files are released by deleting useless files by the instruction of a user. With this, it is possible to prevent the physical storage area from becoming full, and making it no longer possible to store new data before it happens. Desirably, prior to receiving the instruction of file delete from a user, the host computer acquires the number of the physical blocks where the data constituting respective files are stored, and offers the total size of the physical blocks used for the file to a user correspondingly to respective files. With this, it is possible to provide a method of utilizing a storage unit that is highly efficient for a user.

According to another aspect of the present invention, a logical block that is not used by the host computer is recognized and write of dummy data into the recognized logical block is performed by an application program operating on the host computer. Preferably, those data that are able to obtain compressibility higher than the compressibility of average data are used as the dummy data. By writing data of high compressibility into a logical block where those data that have become no longer used by the host computer are stored, it is possible to reduce the number of physical blocks allocated to the logical blocks and to increase free physical blocks that are newly usable. This process is performed asynchronously with normal data access process or with the delete process of files. As a result, the response of access process of data or file delete process is not lowered. Further, since a process is executed according to the points similar to normal data write process, it is possible to use a conventional operating system as it is for the operating system operating on the host computer.

### BRIEF DESCRIPTION OF THE DRAWINGS

Fig. 1 is a block diagram showing a structure of a computer system according to a first embodiment of the present invention;
Fig. 2 is a corresponding diagram between a logical block managed by a host computer and physical blocks in a disk unit;
Fig. 3 is a composition diagram of a logical block table;
Fig. 4 is a composition diagram of a free physical block table;
Fig. 5 is a flowchart of file delete process executed by the host computer;
Fig. 6 is a flowchart of logical block release process executed by a CPU in a disk unit;
Fig. 7 is a flowchart of data write process executed by a CPU in the disk unit;
Fig. 8 is a flowchart of the data write process executed by a host computer;
Fig. 9 is a picture composition diagram showing an output example of a warning to a console;
Fig. 10 is a flowchart of physical block count notification process;
Fig. 11 is a flowchart of delete file select process;
Fig. 12 is a picture composition diagram showing an example of list output of delete file;
Fig. 13 is a block diagram showing a structure of a computer system according to a second embodiment of the present invention;
Fig. 14 is a principle diagram showing the state of increase of the free physical block before and after execution of a free area recovering application program;
Fig. 15 is a flowchart of data write process executed by the CPU in the disk unit;
Fig. 16 is a flowchart of data write process executed by the host computer;
Fig. 17 is a picture composition diagram showing an output example of a warning to a console; and
Fig. 18 is a flowchart of a free area recovering application program.

### DESCRIPTION OF THE PREFERRED EMBODIMENTS

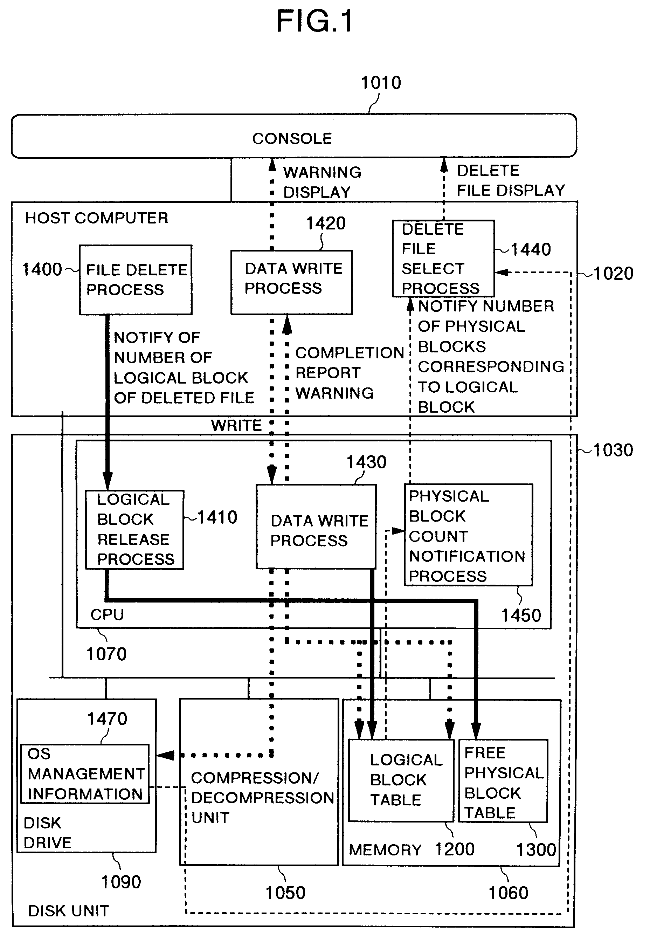

Fig. 1 is a block diagram of a computer system applied with the present invention. A computer system of the present embodiment is structured including a disk unit 1030 capable of storing data with compression as a storage unit, a host computer 1020, and a console 1010 for transmitting information from the host computer 1020 to a user. Furthermore, the disk unit 1030 is structured of a compression/decompression unit 1050 for performing compression process and/or decompression process of data, a CPU 1070 for controlling read, write or the like of data in the disk unit 1030, a memory 1060 and a disk drive 1090 for storing compressed data.

The host computer 1020 includes file delete process 1400, data write process 1420 on the host side and delete file select process 1440 for realizing various functions described in the present embodiment. Further, the CPU 1070 of the disk unit 1030 is provided with respective functions of logical block release process 1410, data write process 1430 on the disk side, and physical block count notification process 1450 for realizing functions performed on the side of the disk unit 1030. Those functions that are provided in the host computer 1020 and the CPU 1070 are realized by software-like techniques with a program in the present embodiment. In the memory 1060 in the disk unit 1030, a logical block table 1200 and a free physical block table 1300 referred to by the CPU 1070 for achieving the functions described above provided in the CPU 1070 are stored. Further, in a disk drive 1090, operating system (OS) management information 1470 used for file management by the operating system on the host computer 1020 is stored. Besides, in the figure, arrow marks in thick solid lines, arrow marks in thick dotted lines and arrow marks in thin dotted lines show the flows of various information (data), respectively.

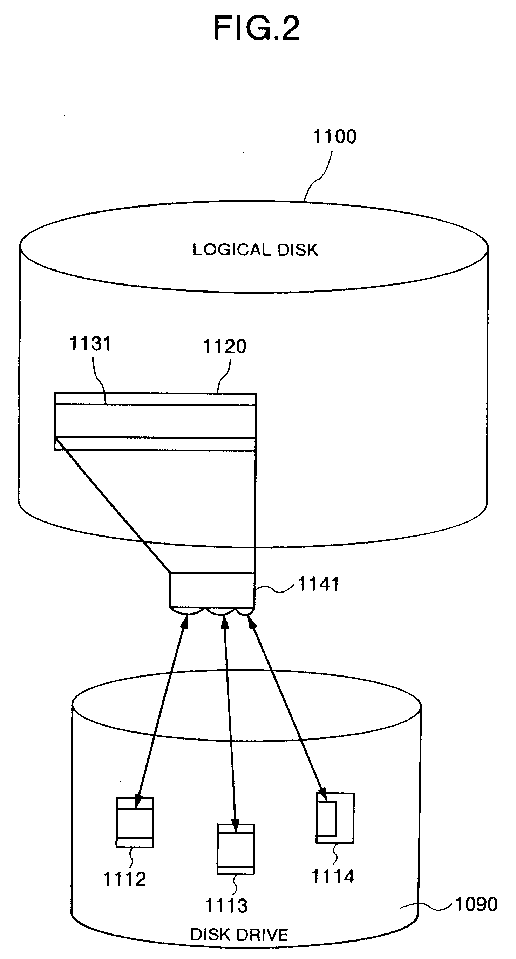

Fig. 2 shows corresponding relationship between a data block on a logical disk 1100 that can be seen from the host computer 1020 and data blocks on a practical physical disk drive 1090 in the present embodiment.

In the present embodiment, it is assumed that the capacity of the logical disk 1100 is 2 GB and the capacity of the disk drive 1090 is 1 GB taking the effect of data compression into consideration. The data on the logical disk 1100 are composed of a logical block 1120 having a size of 4 KB, and the data on the disk drive 1090 are composed of a physical block 1110 having a size of 512 B. The host computer 1020 makes access to the data stored in the disk unit 1030 in a unit of the logical block 1120.

Decompressed data 1131 that are data of the logical block 1120 are compressed and become compressed data 1141, and the compressed data 1141 are divided and stored in a physical block 1112, a physical block 1113 and a physical block 1114 of the disk drive 1090. Since the size of the compressed data obtained by compressing data of the logical block is not fixed in general, the number of the physical blocks required for storing the compressed data becomes one to eight pieces. However, it is assumed that the compressed data 1141 do not become larger than the decompressed data 1131.

Besides, although only one logical block 1120 in the logical disk 1100 is shown, a plurality of logical blocks are stored practically. Similarly, a plurality of physical blocks corresponding or not corresponding to any of logical blocks in the logical disk 1100 exist in the disk drive 1090.

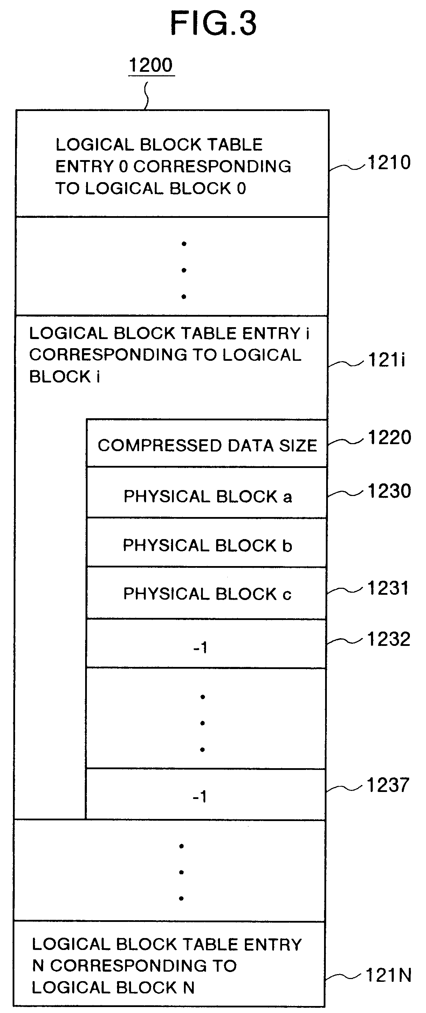

Fig. 3 is a composition diagram of the logical block table 1200. The logical block table 1200 is a table that practically manages coordination between the logical block 1121 and the physical blocks 1112-4. The logical block table 1200 includes logical block number's worth of logical block table entries 1210 to 121N in the logical disk 1100. Respective logical block table entries 1210 to 121N correspond one to one to logical blocks in the logical disk 1100. In Fig. 3, a detailed configuration of the provided entry is shown with respect to the ith logical block table entry 121i only, but the other logical block table entry is composed in a similar manner. Thereafter, as an example, the logical block table entry 121i will be described assuming that it is the logical block table entry corresponding to the logical block 1120 shown in Fig. 2.

The logical block table entry 121i includes a compressed data size 1120 and a plurality of physical block numbers 1230 to 1237 (8 pieces in the present embodiment). In the compressed data size 1120, the data size of compressed data 1141 obtained by compressing the decompressed data 1131 of the logical block 1120 to which the logical block table entry 121i corresponds are stored. It is possible to obtain the number of physical blocks where the compressed data 1141 (of decompressed data 1131 of the logical block 1120) are stored by the data size held in the compressed data size 1220 (here, it is assumed that the number of physical blocks is 3). The physical block numbers of the physical blocks, where the compressed data 1141 are stored, are stored in the physical block numbers 1230 to 1237. Here, the compressed data 1141 are stored in three physical blocks 1112, 1113 and 1114, and the block numbers of these three physical blocks are stored in from the first physical block number 1230 to the third physical block number 1232, respectively. Since no corresponding physical block does not exist in remaining physical block numbers, i.e., from the fourth physical block number 1233 to the eighth physical block number 1237, a value that is impossible as a physical block number such as -1 is stored.

Further, "0" is stored as the compressed size in the logical block table entry corresponding to the logical block where a corresponding physical block does not exist, and a value "-1" is stored in entries of all the physical block number.

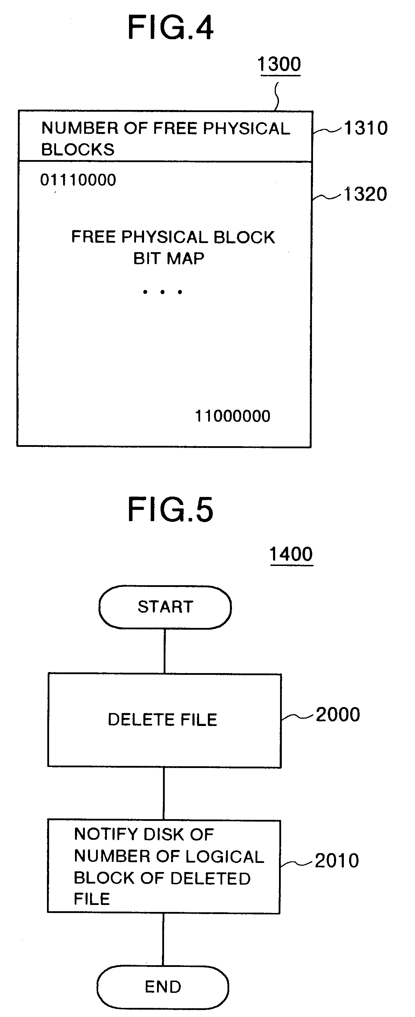

Fig. 4 is a composition diagram of a free physical block management table 1300. The free physical block management table 1300 is a table provided for managing free physical blocks of the disk drive 1090 where effective data are not stored. The free physical block table 1300 is composed of a number 1310 of free physical blocks, and a free physical block bit map 1320 showing whether free or not with 1 bit, respectively, with respect to all the physical blocks on the disk drive 1090. In the present embodiment, the bit corresponding to the physical block in use is set to 0, and the bit corresponding to the free physical block is set to 1.

Next, a summary of the present embodiment will be described with reference to Fig. 1. In a computer system of the present embodiment, when a file is deleted, the file delete process 1400 of the host computer 1020 notifies the logical block release process 1410 of the CPU 1070 of the number of the logical block corresponding to the deleted file. The logical block release process 1410 rewrites the contents of the logical block table 1200 and the free physical block table 1300 on the memory 1060 so that the data of the deleted file are not held. The flow of information when the file is deleted is shown with arrow marks in thick solid lines.

The arrow marks in thick dotted lines show the flow of information (data) at time of data write. First, data write process 1420 of the host computer 1020 issues a write request of data to the disk unit 1030. In accordance with this, data write process 1430 of the CPU 1070, when it is possible to store data in the disk drive 1090, compresses the write data by means of a compression/decompression unit 1050 and writes them into the disk drive 1090. Then, the process 1430 corrects the contents of the logical block table 1200 and the free physical block table 1300 on the memory 1060, and reports to the host computer 1020 of write completion. When there is a logical block that has newly become a free block, the data write process 1420 on the host side notifies the disk 1030 with compression function of the number of that logical block. The data write process 1430 on the disk side corrects the contents of the logical block table 1200 and the free physical block table 1300 and releases the physical block corresponding to the logical block that has become free. On the other hand, when data cannot be stored in the disk drive 1090, the data write process 1430 on the disk side reports the host computer 1020 of a warning. The data write process 1420 on the host side displays a warning on the console 1010 upon receipt of this report.

The arrow marks in thin broken lines show the flow of information when a file name and capacity of a delete file are outputted to the console. First, physical block count notification process 1450 of the CPU 1070 investigates the count of physical blocks corresponding to respective logical blocks 1121 based on the logical block table 1200 stored in the memory 1060 and notifies the host computer 1020 of the result. Then, delete file select process 1440 of the host computer 1020 makes the file and the logical block correspond to each other based on OS management information, and investigates how many physical blocks respective files correspond to, respectively, by collating the result of correspondence and the information that has been sent from the disk 1030 with compression function with each other. Then, the file names are sorted in the order of count of corresponding physical blocks, and output them to the console 1010.

The above-mentioned process will be described in detail with reference to a flowchart.

Fig. 5 is a flowchart of the file delete process 1400 executed by the host computer 1020. In the file delete process 1400, a function for handling a disk unit having a compression function is added to the file delete process of the operating system. First, in a step 2000, the host computer 1020 deletes the file required to be deleted. In a step 2010, the host computer issues a logical block release command to the disk unit 1030, and notifies of the number of the logical block to which the deleted file has been allocated.

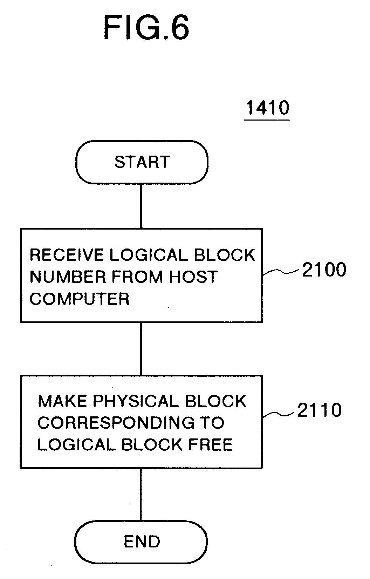

Fig. 6 is a flowchart of the logical block release process 1410 executed by the CPU 1070. First, in a step 2100, the CPU 1070 receives the number of the logical block from the host computer 1020. In a step 2110, the logical block table 1200 and the free physical block table 1300 are rewritten, thereby to make the physical block corresponding to the logical block the number of which has been received free.

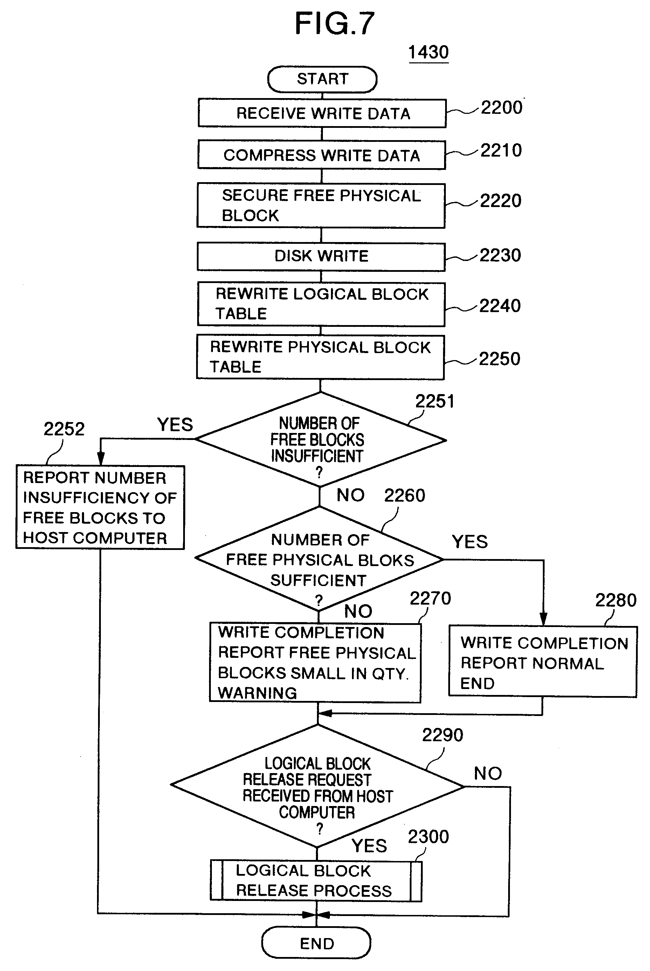

Fig. 7 is a flowchart of the data write process 1430 executed by the CPU 1070. The CPU 1070 receives write data first from the host computer 1020 and stores them in the memory 1060 in a step 2200. Since these write data are in a non-compressed state, they are called decompressed data. Next, in a step 2210, the decompressed data stored in the memory 1060 are compressed by means of the compression/decompression unit 1050 so as to generate compressed data, which are stored again in the memory 1060. Then, the CPU 1070 refers to a free physical block bit map 1320, and searches for free physical blocks in a number required for storing compressed data (a step 2220). The compressed data on the memory 1060 are written in a free physical block that has been found in the step 2220 (a step 2230).

In a step 2240, the CPU 1070 rewrites a logical block table entry corresponding to the logical block required for write, so that the logical block and the physical block are made to correspond to each other. Furthermore, in a step 2250, the CPU 1070 subtracts the number of written physical blocks from the number 1310 of free physical blocks stored in the free physical block table 1300, and sets 0 that shows an occupied state to the bit corresponding to the written physical block in the free physical block bit map 1320. Further, the CPU 1070 releases the physical block corresponding originally to the logical block required for write as a free block, adds the number to the number 1310 of free physical blocks, and set 1 to the corresponding bit in the free physical block bit map 1320.

In a step 2251, the CPU 1710 determines whether there are free physical blocks having capacity capable of storing write data based on the number 1310 of free physical blocks of the free physical block table 1300. Then, when the physical blocks are insufficient, the process jumps to a step 2252. When the physical blocks are not insufficient, the CPU 1070 determines whether free physical blocks remain sufficiently or not based on the number 1310 of free physical blocks of the free physical block table 1300. In the present embodiment, it is assumed to determine that the free physical blocks remain sufficiently when the number of the free physical blocks is 10% or more of the total number of physical blocks.

Then, when it is determined that the free physical blocks remain sufficiently in number, the process jumps to a step 2280. When it is determined that the free physical blocks do not remain sufficiently, the CPU 1070 reports to the host computer 1020 of write completion and also reports of a warning showing that free physical blocks are small in number in a step 2270. In a step 2290, it is determined whether a request for logical block release has been received from the host computer 1020 or not. The CPU 1070 completes write process 1430 when the request for logical block release has not been received. When the request for logical block release has been received, logical block release process 1410 shown in Fig. 6 is executed so as to complete write process 1430 in a step 2300.

Meanwhile, in a step 2280, the CPU 1070 reports to the host computer 1020 of write completion, but, at this time, warning report is not made, but normal completion is reported, and the process jumps to the step 2290.

On the other hand, in a step 2252, it is reported to the host computer 1020 that free physical blocks are insufficient and the write data cannot be stored in a disk, thus completing the data write process 1430.

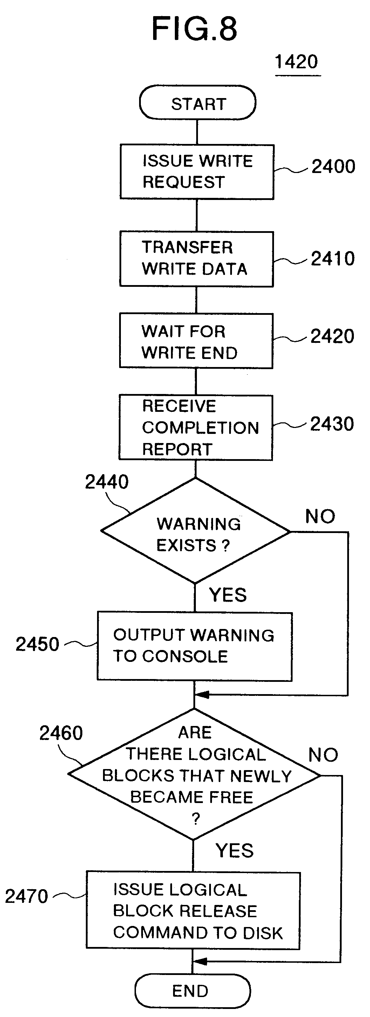

Fig. 8 is a flowchart of data write process 1420 executed by the host computer 1020. First, in a step 2400, the host computer 1020 issues write request to the disk unit 1030. In a step 2410, write data are sent to the disk unit 1030. In a step 2420, the host computer 1020 waits for completion of write process of the disk unit. When a completion report is received from the disk unit 1030 with compression function in a step 2430, the host computer 1020 determines in a step 2440 whether a warning showing that free physical blocks are small in number has been reported from the disk unit 1030 or not. In the case of no warning, the process jumps to a step 2460. When a warning has been reported, the host computer 1020 outputs a warning to the console 1010 and suggests a countermeasure to a user in a step 2450. In a step 2460, the host computer 1020 determines whether a logical block that has newly become free exists or not. This process is produced when a logical block allocated to a file by the operating system is changed by subscription of the file or the like. When any logical block that newly becomes free does not exist, the host computer 1020 completes the data write process 1420. When a free logical block exists, in a step 2470, the host computer issues a release request of the logical block to the disk unit 1030, and transmits the number of the logical block that has become a free block, thus the host computer 1020 completing the data write process 1420.

As described above, the host computer 1020 notifies the disk unit 1030 of a logical block that becomes unnecessary to hold data so that useless data are not held in the disk unit 1030 whenever the file is deleted or whenever the logical block allocated to the file is altered by data write process. With this, it is possible to raise the utilization efficiency of the disk unit 1030.

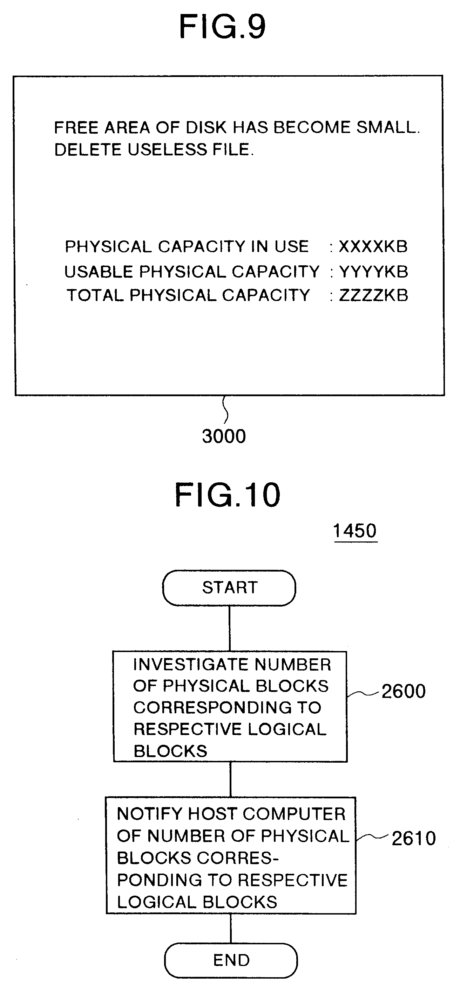

Fig. 9 shows an example of a warning displayed on the console 1010. It is notified to a user that free physical blocks are small in number by the display "FREE AREA OF DISK HAS BECOME SMALL". The display "DELETE USELESS FILE" suggests a user of a countermeasure thereafter. The user can increase the number of free physical blocks in the disk unit 1030 by deleting files determined to be useless.

The display:
- "Physical capacity in use:: XXXX KB
- Usable physical capacity:: YYYY KB
- Total physical capacity:: ZZZZ KB"
is to notify a user of a utilization state of the disk drive 1090. It is possible for the user to learn an aim of reduction quantity of files with this display.

Then, the user deletes useless files. When usable physical capacity is still insufficient, it is possible to prevent the physical use area from becoming full by copying some of the files in another disk unit or tape unit not illustrated so as to delete them from the disk unit 1030, thus increasing free physical blocks.

Finally, a process of showing a delete file to a user will be described. When a user selects some of files to be deleted, a big difference is produced in the number of free physical blocks that become newly usable between a case that only those files having high compressibility are selected and a case that only those files having low compressibility are selected. Accordingly, in the present embodiment, file names are outputted in the order of number of corresponding physical blocks to the console 1010, so that the user may select those files that as many physical blocks as possible become free as the object of deletion when the file is erased.

Fig. 10 is a flowchart of a process executed by the CPU 1070 according to the physical block count notification process 1450. First, in a step 2600, the CPU 1070 investigates the number of physical blocks corresponding to respective logical blocks based on the logical block table 1200. The CPU 1070 transmits the number of physical blocks corresponding to respective logical blocks to the host computer 1020 in a step 2610.

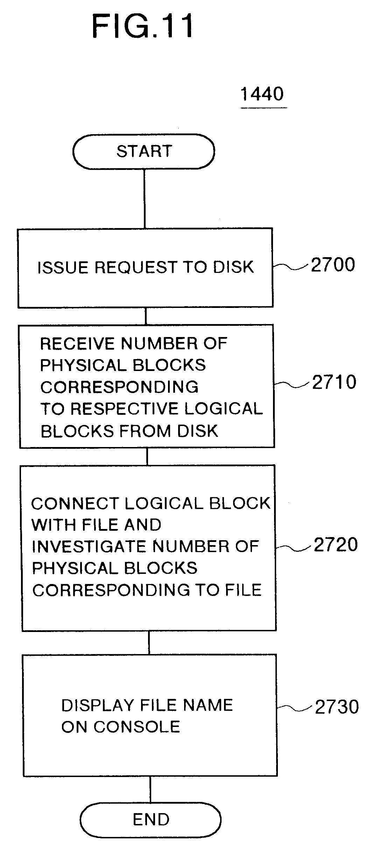

Fig. 11 is a flowchart of delete file select process 1440 executed by the host computer 1020. First, in a step 2700, the host computer 1020 requests the disk unit 1030 to notify of the number of physical blocks corresponding to respective logical blocks. In a step 2710, the host computer 1020 receives data showing the number of physical block corresponding to each logical block from the disk unit 1030. In a step 2720, the logical block and the file are correlated with each other based on OS management information 1470, and the number of physical blocks holding data of a file is investigated with respect to each file. Here, it is possible to use management information used by the OS for managing the file as it is as the OS management information 1470. In general, the management information utilized by the OS includes information showing where in the storage unit such as a disk unit the data constituting respective files managed by the OS are stored, information showing the utilization state of the storage area in the storage unit and so on. Besides, in the present embodiment, the logical disk 1100 corresponds to the storage unit mentioned herein. Namely, the OS management information 1470 holds the information showing the corresponding relationship between respective files and the logical blocks where the data of these files are stored and the utilization state of logical blocks. Finally, the host computer 1020 outputs file names to the console 1010 in the order of number of corresponding physical blocks in the step 2730.

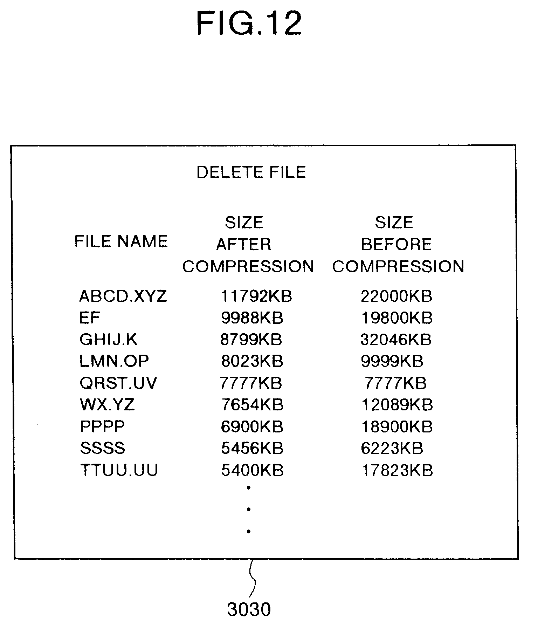

Fig. 12 is an example of a picture output of a delete file. Information composed of file name, file size after data compression and file size before data compression is displayed in order of file size after data compression for each file. The file size after data compression is obtainable by multiplying the number of physical blocks corresponding to the file by the size of the physical block. Further, the file size before data compression is obtainable from the OS management information 1470.

A user is able to learn which file occupies the disk unit 4030 largely by looking at the console, and only needs to select the file to be deleted with this information as one of selecting materials.

In the embodiment described above, in order to solve the problem of the utilization efficiency of the disk unit, a delete instruction is notified to the disk and the physical blocks corresponding to logical blocks allocated to the deleted file are released whenever the file is deleted. Since this process is executed synchronously with delete process of the file or write process, however, there is such a drawback that the overhead attendant upon synchronization of the process becomes larger. Further, there is also such a problem that it is required to notify the disk of the logical block that has become no longer necessary to hold the data and to incorporate the function of executing the process for making the corresponding physical block free into the OS, and the reconstruction scale is large. An embodiment in which those problems have been solved is shown hereunder.

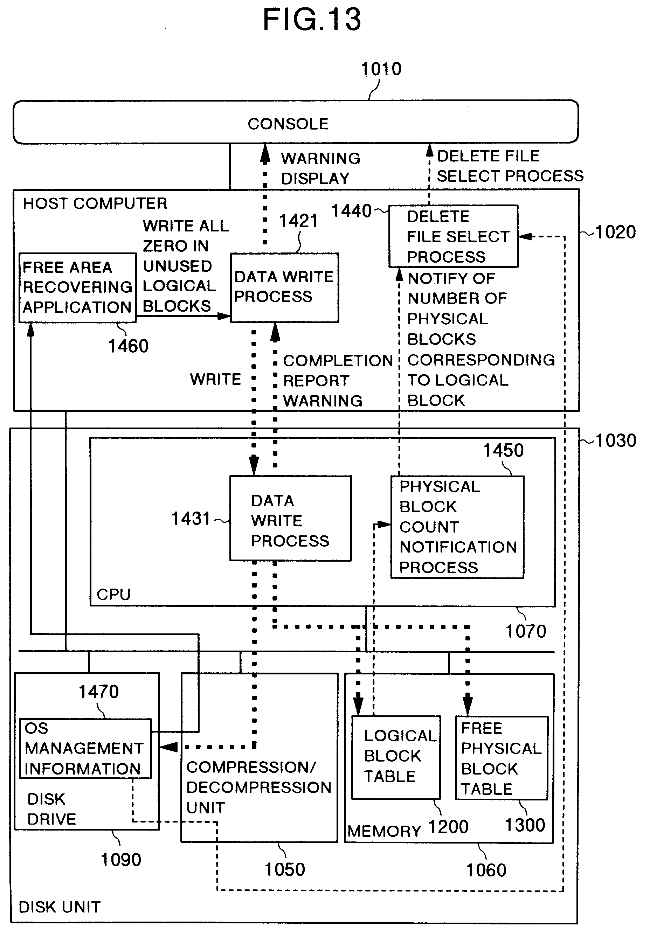

Fig. 13 is a block diagram of a computer system in a second embodiment. In the present embodiment, the overhead of delete process or write process of the file is reduced, thereby to make the reconstruction scale of the OS smaller. In order to achieve the foregoing, a free area recovering application program 1460 for writing data of high compressibility collectively in all the logical blocks that do not need to hold data when usable free physical blocks become smaller in quantity without notifying the disk of deletion of the file whenever it occurs is provided. The number of usable free physical blocks 1110 is increased by the process 1460, thereby to cope with the problem of the utilization efficiency of the disk 1030 with a compression function.

In Fig. 13, arrow marks in thick dotted lines show the flow of information (data) at data write time. First, a data write process 1421 of the host computer 1020 issues write request of data to the disk unit 1030. Data write process 1431 of the CPU 1070, when data can be stored on the disk drive 1090, compresses write data by a compression/decompression unit 1050 and writes the result thereof in the disk drive 1090 in accordance with write request. Then, the contents of the logical block table 1200 and the free physical block table 1300 of the memory 1060 are corrected, and write completion is reported to the host computer 1020. On the other hand, when data cannot be stored in the disk drive 1090, the data write process 1431 on the disk side reports the host computer 1020 of a warning. The data write process 1421 on the host side displays a warning on the console 1010 upon receipt of this report.

Arrow marks in thin broken lines show the flow of information when a delete file is outputted to the console. First, the physical block count notification process 1450 of the CPU 1070 investigates the number of physical blocks corresponding to respective logical blocks 1120 based on the logical block table 1200 located in the memory 1060 and informs the number to the host computer 1020. The delete file select process 1440 of the host computer 1020 has the file and the logical block 1120 correspond to each other based on OS management information 1470, and collates this with the received information with each other, thereby to investigate how many physical blocks each file corresponds to, respectively. File names are sorted in order of number of corresponding physical blocks, and outputted to the console 1010.

Arrow marks in thin solid lines show the flow of information when the free area recovering application program 1460 of the host computer 1020 executes the process. First, logical blocks that are not used by the operating system are determined based on the OS management information 1470. The free area recovering application program 1460 issues a write request to the data write process 1421 on the host side so as to write the data of all 0 in all the virgin logical blocks based on the determination. Besides, in Fig. 13, reference numerals used in Fig. 1 are used as they are for those that correspond to the components shown in Fig. 1.

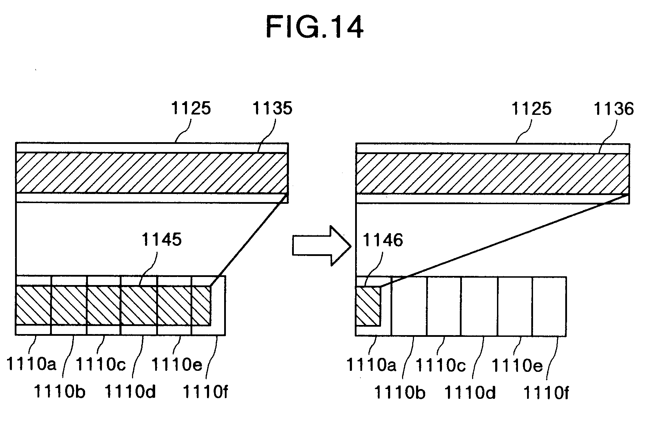

Fig. 14 is a principle diagram showing a state that free physical blocks increase by the process executed by the free area recovering application program 1460. In Fig. 14, 1125 represents a logical block, and decompressed data 1135 are stored there in a state before the process by the free area recovering application program 1460 is executed. The decompressed data 1135 are compressed by compression process and become compressed data 1145. These compressed data 1145 are stored in six pieces of physical blocks 1110a to 1110f. Here, it is assumed that the data (decompressed data 1135) stored in the logical block 1125 become unnecessary, and the recovering process of the free area has been performed by the free area recovering application program 1460. Then, dummy data 1136 are written in the logical block 1125. Practically, the dummy data 1136 are compressed and become compressed data 1146, and stored in one physical block 1110a. As a result, five physical blocks 1110b to 1110f among six physical blocks where compressed data 1145 obtained by compressing decompressed data 1135 before recovering process is performed have been stored are released as free physical blocks. Besides, those data capable of obtaining comparatively high compressibility such as those that all the bits are composed of 0 are used as the dummy data. In the present embodiment, description is made assuming that the dummy data are compressed down to the size that is installed in one physical block by compression process, but this is varied depending on the data used as the dummy data and algorithm of compression used for compression process. The data having compressibility higher than at least the compressibility of average data are used as the data used as the dummy data. The higher the compressibility of the data is, the more the physical blocks can be released as free areas.

The process executed by the host computer 1020 and the CPU 1070 in the disk unit 1030 in the present embodiment will be described in the points that are different from the first embodiment described previously.

In the present embodiment, the host computer 1020 needs not to inform the disk unit 1030 of deletion of the logical block corresponding to the file deleted synchronously with the file delete process. Accordingly, the file delete process executed by the host computer 1020 is performed in a same manner to conventional file delete process. In brief, it is possible to use file delete process included in a conventional operating system operating on the host computer 1020 as it is in the present embodiment.

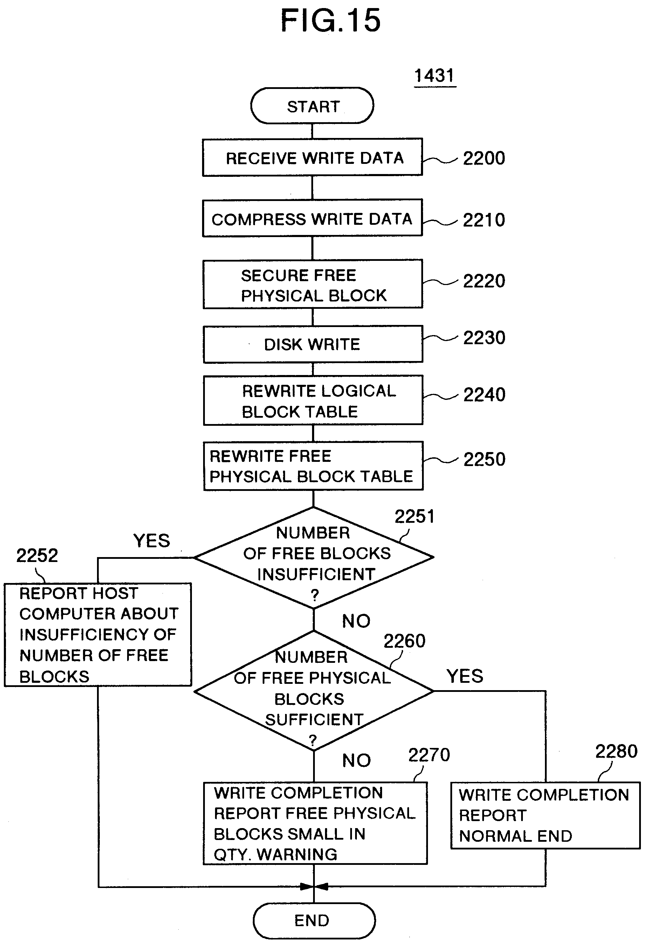

Fig. 15 shows a flowchart of data write process 1431 executed by the CPU 1070 of the disk unit 1030. In Fig. 15, the same reference numerals as the step numbers used in Fig. 7 are used with respect to the step where the same process as the data write process 1430 of the CPU 1070 in the first embodiment is performed. Since the logical block that has become unnecessary at time of data write to the file is not released in the data write process 1431 of the present embodiment, the processes in the steps 2290 and 2300 shown in Fig. 7 become unnecessary. In other steps, the process similar to that in a step corresponding to Fig. 7 in the first embodiment is performed.

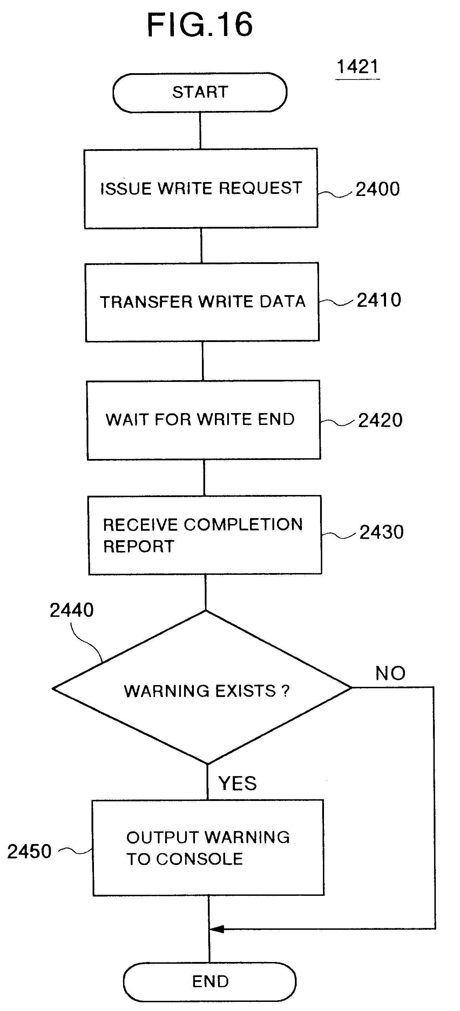

Fig. 16 is a flowchart showing the flow of the data write process 1421 executed by the host computer 1020. In Fig. 16, the same numbers as the step numbers used in Fig. 8 are used with respect to the steps where the same process as the data write process 1420 of the host computer 1020 in the first embodiment is performed. In the data write process 1421 of the present embodiment, the logical block that has become unnecessary at time of data write to the file is not released similarly to the data write process executed by the CPU 1070 of the disk unit 1030. Therefore, processes in the steps 2460 and 2470 shown in Fig. 8 become unnecessary. With respect to other steps, the process similar to the corresponding steps in Fig. 8 in the first embodiment is performed.

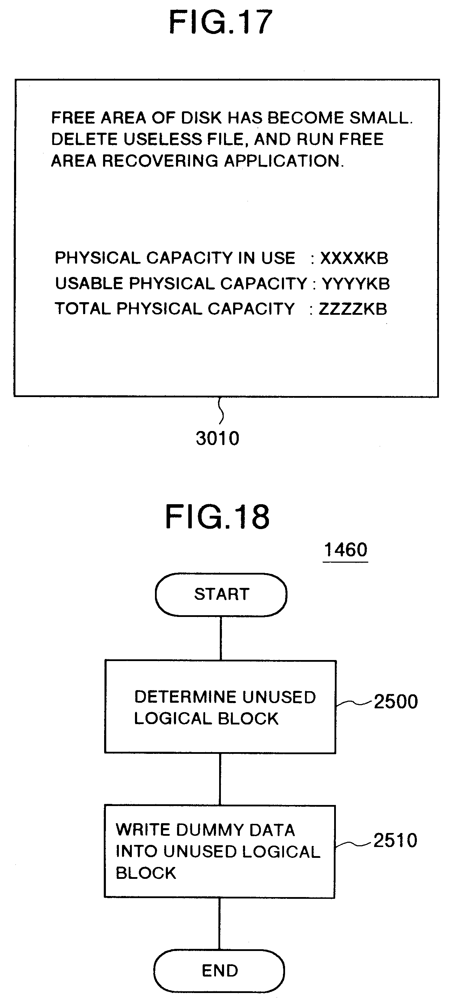

Fig. 17 is a display example of a warning picture outputted to the console 1010 in the present embodiment. In the present embodiment, the physical block in the disk unit 1030 is not released at time of file delete, so it is impossible to newly increase usable physical blocks by deleting files. In order to newly increase usable physical blocks, it is required to execute the free area recovering application program 1460 thereby to release physical blocks that have become unused. Thus, in the present embodiment, a warning picture 3010 in which the display "RUN FREE AREA RECOVERING APPLICATION" is added to the warning picture 3000 (Fig. 9) in the first embodiment is used as a warning picture displayed when the number of the newly usable physical blocks becomes smaller. A user can learn the timing of executing the free area recovering application program by the warning picture 3010 being displayed on the console 1010.

Fig. 18 is a flowchart of the free area recovering application program 1460. In a step 2500, logical blocks that are not used are determined based on OS management information 1470 of the host computer 1020. In a step 2510, write process of dummy data to a logical block determined as unused is performed. Besides, the write process of dummy data may be executed by the data write processes 1420 and 1430 as a normal data write process complying with a write request issued by the free area recovering application program 1460.

In the present embodiment, it is possible to release the physical block that continues to hold the data of the deleted file so as to increase free physical blocks in the disk unit 1030 by having the free area recovering application program 1460 executed as described above.

As described above with reference to the embodiment, according to the present invention, the storage unit having a compression function reports to the host computer of a warning when the number of physical blocks capable of allocating new logical blocks becomes smaller and it is determined that physical use area approaches full. The host computer receives the report and outputs it to the console. As a result, a user can notice that the physical use area approaches full by looking at the warning outputted to the console. It is possible for a user to prevent in advance the physically usable storage area from becoming full by instructing deletion of a file optionally or recovering process of a physical block based on this warning.

## Claims

1. A method of managing a storage area of a storage unit in a computer system having a host computer (1020) and a disk drive (1090) for compressing data utilized by said host computer (1020) and storing the compressed data, comprising the steps of:
issuing a write request of data of a logical block (1120) that is a management unit of data of said host computer (1020) to said disk drive (1090) from said host computer (1020);
compressing data of said logical block (1120) received from said host computer (1020) by said disk drive (1090) in accordance with said write request;
allocating data compressed by said compression to physical blocks (1112, 1113, 1114) that are physical data storage units of said disk drive (1090);
storing said compressed data in said physical blocks (1112, 1113, 1114) allocated by said allocation;
determining whether there are a sufficient number of free physical blocks that are not allocated for logical blocks; and
giving a warning to said host computer (1020) when it is determined that the number of said free physical blocks is small.

2. A method of managing a storage area according to Claim 1, further comprising a step that said host computer (1020) receives said warning from said disk drive (1090) and informs said warning to a user.

3. A method of managing a storage area according to Claim 2, further comprising the steps of:
receiving a request for file deletion including designation of a file to be deleted from a user by said host computer (1020);
issuing an instruction of file deletion from said host computer (1020) to said disk drive (1090) in response to said request for file deletion; and
releasing physical blocks for storing data constituting the file indicated in accordance with said file delete instruction as free physical blocks by said disk drive (1090).

4. A method of managing a storage area according to Claim 3, wherein:
said step of issuing said file delete instruction includes a step of recognizing a logical block in which data constituting said file to be deleted are stored in accordance with information holding corresponding relationship between a file used by said host computer (1020) and a logical block for storing data constituting the file, and a step of designating the recognized logical block and issuing said delete instruction; and
said releasing step includes a step of identifying a physical block corresponding to a logical block designated by said delete instruction in accordance with information holding corresponding relationship between each logical block and each physical block, and a step of releasing the identified physical block as a free block.

5. A method of managing a storage area according to Claim 3, wherein said step of receiving said file delete request includes the steps of:
designating a logical block storing data of a file managed by said host computer (1020) from said host computer (1020) and inquiring of said disk drive (1090) about the number of physical blocks allocated for said logical block;
acquiring the number of physical blocks allocated to each file based on the response to said inquiry; and
informing file name and number of acquired physical blocks to a user with respect to each file while having them correspond to each other.

6. A method of managing a storage area according to Claim 2, further comprising the steps of:
receiving a recovering request of the physical blocks in said disk drive (1090) from a user by means of said host computer (1020);
investigating utilization status of physical blocks managed by said host computer (1020) and extracting logical blocks that have not been allocated to a file complying with said recovering request;
designating extracted logical blocks and issuing a write request of predetermined dummy data (1136) to said disk drive (1090);
compressing said dummy data (1136) by said disk drive (1090) complying with the write request of said dummy data (1136); and
storing compressed dummy data (1146) in a physical block (1110a) corresponding to the designated logical block (1125).

7. A method of managing a storage area according to Claim 6, wherein said dummy data (1136) have compressibility higher than the compressibility of average data.

8. A method of managing a storage area according to Claim 6, wherein said step of storing said compressed dummy data (1146) includes a step of storing said compressed dummy data (1146) in a part of physical block (1110a) allocated to said logical block (1125), and a step of releasing another part of physical blocks where said compressed dummy data (1146) have not been stored as free physical blocks.

9. A disk drive connected to a host computer and for storing data used by said host computer, comprising:
a storage medium (1090) having a plurality of physical blocks (1112, 1113, 1114) each being a physical storage unit of data;
means (1070) for receiving from said host computer (1020) data of a logical block that is a management unit of data in said host computer (1020);
compression means (1050) for compressing data received by said receiving means (1070);
means (1070) for allocating physical blocks on said storage medium (1090) in order to store the data compressed by said compression means (1050) on said storage medium (1090);
physical block management means (1200) for holding corresponding relationship between the physical blocks allocated by said allocation means and said logical block;
free physical block count management means (1300) for managing the number of free physical blocks where allocation to logical blocks by said allocation means is not made among said plurality of physical blocks;
means (1070) for examining the number of physical blocks managed by said free physical block count management means (1300) and determining whether there are a sufficient number of free physical blocks or not; and
means (1430) for giving a warning to said host computer (1020) when it is found that the number of said free physical blocks is insufficient as a result of determination by said determining means (1070).
